# FASCICULE DE BREVET EUROPEEN

(11) **EP 0 284 495 B1**
(45) Date de publication et mention de la délivrance du brevet: **08.09.1993**
(21) Numéro de dépôt: 88400628.9
(22) Date de dépôt: 16.03.1988
(51) Int. Cl.: G11B 5/33, G11B 5/39

(54) **Tête magnétique de lecture pour piste de très faible largeur et procédé de fabrication**
Magnetkopf zum Lesen von Spuren mit sehr schmaler Breite und Herstellungverfahren
Magnetic head for reading of very small width tracks and fabrication method

(30) Priorité: 19.03.1987 FR 8703821
(43) Date de publication de la demande: 28.09.1988
(73) Titulaire: COMMISSARIAT A L'ENERGIE ATOMIQUE, 75015 Paris Cédex 15 (FR)
(72) Inventeur: Lazzari, Jean-Pierre, F-38700 Corenc (FR)
(74) Mandataire: Mongrédien, André

(56) Documents cités:
- EP-A- 0 096 741
- DE-A- 2 205 799
- US-A- 3 800 193
- IBM TECHNICAL DISCLOSURE BULLETIN, vol. 17, no. 11, avril 1975, pages 3446-3449, Armonk, New York, US; L.T. ROMANKIW et al.: "Batch fabrication of keyhole type magnetic recording heads"
- PATENT ABSTRACTS OF JAPAN, vol. 7, no. 164 (P-211)[1309], 19 juillet 1983; & JP-A-58 70 416
- PATENT ABSTRACTS OF JAPAN, vol. 7, no. 184 (P-216)[1329], 13 août 1983; & JP-A-58 85 916
- PATENT ABSTRACTS OF JAPAN, vol. 4, no. 78 (P-14)[560], 6 juin 1980; & JP-A-55 42 370
- PATENT ABSTRACTS OF JAPAN, vol. 8, no. 86 (P-269)[1523], 19 avril 1984; & JP-A-59 2221
- IBM TECHNICAL DISCLOSURE BULLETIN, vol. 22, no. 1, juin 1979, page 331, New York, US; J.W. BECK et al.: "Magnetic head assembly including head circuitry"
- PATENT ABSTRACTS OF JAPAN, vol. 12, no. 399 (P-775)[3246], 24 octobre 1988; & JP-A-63 138 513

## Description

La présente invention a pour objet une tête magnétique de lecture pour piste de très faible largeur et un procédé de fabrication de cette tête.

Pour augmenter la densité surfacique d'enregistrement des informations sur un support en forme de disque ou de bande, on dispose de deux moyens :
- augmenter le nombre d'éléments binaires par unité de longueur dans le sens de défilement de la piste magnétique,
- augmenter le nombre de pistes d'enregistrement.

La première solution conduit vite à des difficultés insurmontables qui proviennent de ce qu'il faut réduire de plus en plus la séparation entre la tête de lecture et la couche d'enregistrement.

La seconde solution semble plus attrayante, mais elle n'est pas exempte de difficultés. Elle implique en effet des pistes de largeur très faible, ce qui pose des problèmes de réalisation pour les têtes de lecture.

Le document US-A-3 800 193 décrit une tête magnétique qui comprend deux pièces polaires réalisées par photolithogravure. L'entrefer reste large et de l'ordre de plusieurs micromètres. Cette largeur manque de précision.

Le document JP-A-58 70416 décrit un procédé de réalisation d'une tête magnétique qui consiste à partir de deux pièces massives et à coller ces pièces l'une sur l'autre avec une couche de verre. L'entrefer est donc encore large et imprécis.

L'article de IBM Technical Disclosure Bulletin, vol. 17, n° 11, avril 1975, pages 3446-3449 décrit un procédé collectif de réalisation de têtes magnétiques consistant à percer une structure magnétique en sandwich par des trous et des fentes. L'entrefer est encore large et sa précision laisse à désirer.

La présente invention a justement pour but de proposer une tête de lecture spécialement adaptée à la lecture de pistes de très faible largeur. Selon l'invention, l'entrefer est défini par un espaceur amagnétique qui est obtenu par une technique de dépôt et de gravure de couches minces. Il est donc d'une très petite largeur et d'une grande précision. Il est alors aisé de compléter l'ensemble par une couche magnétique mince (de l'ordre du micromètre) qui viendra de part et d'autre de cet espaceur et qui définira ainsi un entrefer dont la largeur de la piste à lire. La piste peut donc être très étroite (l micromètre environ).

Comme le signal de lecture est proportionnel à la largeur de la piste, il devient très faible pour une piste très étroite. Il faut donc simultanément prévoir des dispositions aptes à conférer à la tête une bonne sensibilité. A cet égard, le document DE-A-2 205 799 décrit une tête magnétique de lecture possédant un circuit magnétique interrompu par deux fentes dans lesquelles sont insérés deux éléments magnétorésistifs.

Le document JP-A-592221 décrit l'intégration sur un même substrat isolant d'une série de circuits électroniques et d'une série de têtes magnétorésistives.

La présente invention reprend cette disposition consistant à utiliser des moyens sensibles au champ magnétique et insérés dans le circuit magnétique. Il peut s'agir par exemple de magnétorésistances, de magnétodiodes, de magnétotransistors, et.... Ces éléments sont montés en opposition et reliés à un circuit intégré diffusé dans le substrat même qui porte le circuit magnétique.

De façon précise, l'invention a pour objet une tête magnétique de lecture, comprenant un substrat semiconducteur sur lequel est déposé un circuit magnétique en forme de bouche comprenant deux pièces polaires d'épaisseur égale à la largeur de la piste à lire et séparées par un entrefer, ce circuit magnétique étant interrompu par au moins une fente dans laquelle est inséré un moyen dont une caractéristique électrique est sensible au flux magnétique dans le circuit lors du passage, sous l'entrefer, d'un élément d'information magnétique enregistré sur une piste, cette tête étant caractérisée par le fait que :
- elle comprend un espaceur amagnétique qui a été formé en premier lieu sur le substrat semiconducteur et dont la hauteur est au moins égale à la largeur de la piste à lire, le circuit magnétique ayant été formé ensuite autour de l'espaceur, les pièces polaires venant de part et d'autre de l'espaceur, ledit espaceur ayant une épaisseur qui définit la largeur de l'entrefer,
- le circuit magnétique est interrompu par deux fentes disposées symétriquement par rapport au plan de l'entrefer, les deux éléments ayant une propriété électrique sensible au champ magnétique étant insérés dans le circuit magnétique dans les deux fentes.

La présente invention a également pour objet un procédé de réalisation d'une tête de lecture, caractérisé par le fait que :
- on réalise sur l'une des faces d'un substrat semiconducteur des circuits intégrés comprenant chacun un générateur de courant et un amplificateur différentiel,
- on dépose sur cette face du substrat une couche isolante,
- on dépose une couche isolante d'épaisseur au moins égale à la largeur de la piste à lire, on grave cette couche pour faire apparaître des parois verticales aux endroits où l'on souhaite former des espaceurs amagnétiques, on dépose sur l'ensemble une couche de matériau amagnétique et on enlève toutes les parties horizontales de la couche de matériau amagnétique pour ne laisser subsister que les parties verticales de la couche, on enlève ce qui reste de la couche isolante, ce qui laisse autant d'espaceurs amagnétiques que de circuits intégrés, chaque espaceur ayant une hauteur supérieure à la largeur de la piste à lire,
- on réalise autant de circuits magnétiques que de circuits intégrés, chaque circuit ayant une forme de boucle enserrant l'espaceur qui définit l'entrefer, chaque boucle présentant deux fentes symétriques par rapport au plan de l'espaceur,
- on dépose dans les fentes deux éléments présentant une caractéristique sensible au champ magnétique,
- on interconnecte ces deux éléments avec le circuit intégré associé,
- on découpe les différents composants obtenus.

De toute façon, les caractéristiques de l'invention apparaîtront mieux après la description qui suit, d'exemples de réalisation donnés à titre explicatif et nullement limitatif. Cette description se réfère à des dessins annexés sur lesquels :
- la figure 1 représente une plaquette de silicium avec des circuits intégrés,
- la figure 2 est une coupe de cette plaquette,
- la figure 3 représente diverses étapes d'un procédé de réalisation d'espaceurs amagnétiques,
- la figure 4 montre une plaquette de silicium avec des circuits intégrés et des espaceurs,
- la figure 5 montre, en vue de dessus, une couche magnétique dans un premier mode de réalisation,
- la figure 6 montre un circuit magnétique dans un second mode de réalisation,
- la figure 7 montre le circuit magnétique avec ces magnétorésistances,
- la figure 8 montre l'ensemble après connexion de magnétorésistances avec le circuit intégré,
- la figure 9 montre la fixation d'un composant sur un patin de vol,
- la figure 10 montre le sens de l'induction magnétique et des courants électriques d'alimentation,
- la figure 11 est un schéma montrant la variation de résistance des magnétorésistances en fonction du champ magnétique.

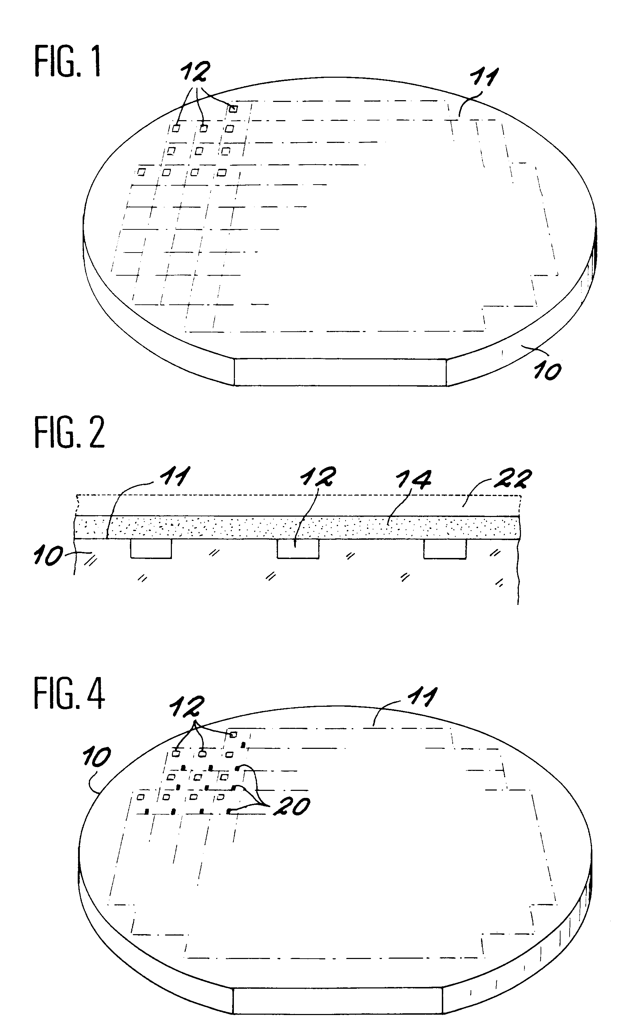

Sur la figure 1, on voit une plaquette 10 de silicium monocristallin ayant une face supérieure 11 sur laquelle on forme des circuits électroniques 12, par des moyens classiques en microélectronique. Chaque circuit comprend au moins un générateur de courant régulé et un amplificateur différentiel.

La figure 2 montre, en coupe, le substrat 10, avec ses circuits 12. Une couche isolante 14, par exemple en SiO₂ est déposée sur l'ensemble pour isoler les circuits.

Le procédé de réalisation se poursuit selon l'une ou l'autre de deux variantes :

### Première variante :

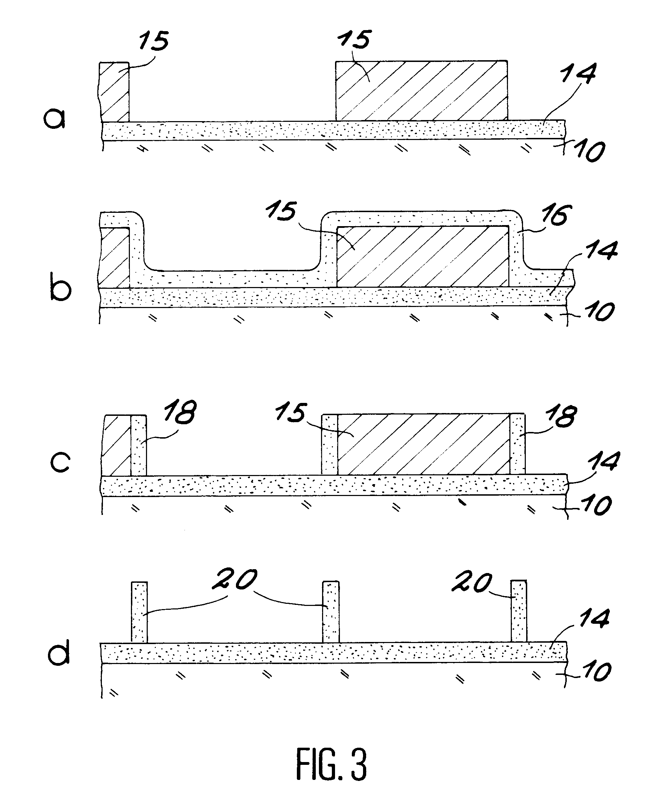

On forme des espaceurs amagnétiques selon une technique connue qui est illustrée sur la figure 3. Pour cela, on dépose une couche isolante 15 que l'on grave pour faire apparaître des parois verticales là ou l'on veut former les espaceurs (partie a). L'épaisseur de cette couche est au moins égale à la largeur de la piste à lire. On dépose sur l'ensemble une couche 16 de matériau amagnétique (partie b).

On enlève toutes les parties horizontales de la couche 16 pour ne laisser subsister que les parties verticales 18 (partie c). On enlève ce qui reste de la couche 15 (partie d), ce qui laisse des espaceurs 20 sur la couche 14.

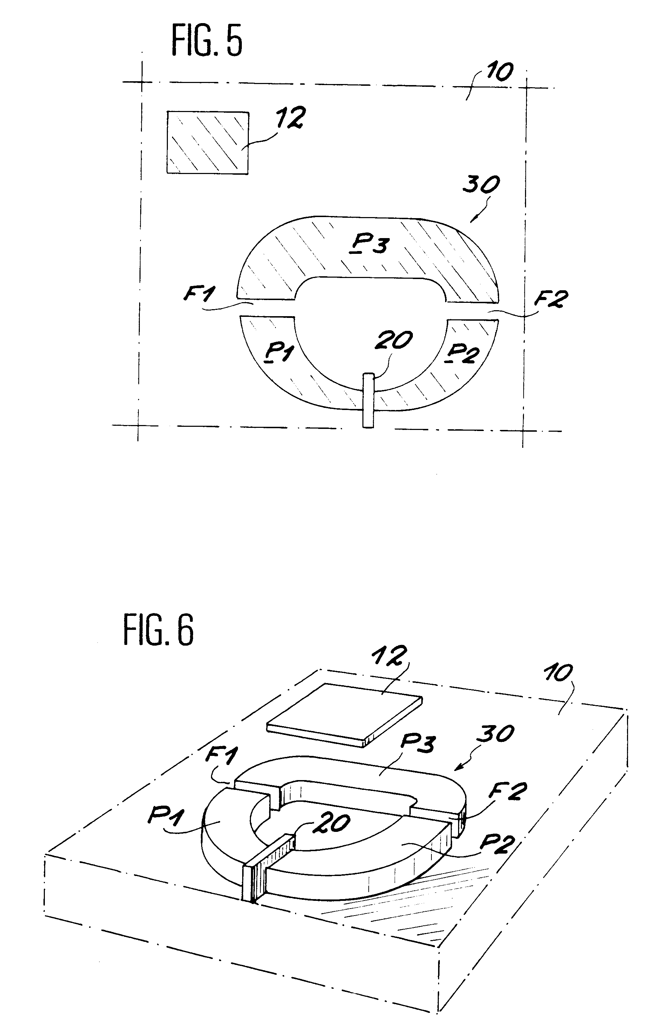

La figure 4 illustre la plaquette de silicium 10 avec les circuits intégrés 12 et les espaceurs amagnétiques 20. Naturellement, sur cette figure, les échelles ne sont pas respectées.

On dépose ensuite sur l'ensemble une couche de matériau magnétique à forte perméabilité. L'épaisseur de cette couche est égale à la largeur de la piste à lire. On grave cette couche pour lui donner la forme illustrée sur la figure 5 pour constituer un circuit 30 en forme de boucle comprenant deux pièces polaires P1, P2 séparées par un espaceur 20, et une partie arrière P3 séparée des pièces polaires par deux fentes F1 et F2 de quelques micromètres de largeur. Ce circuit magnétique est à proximité du circuit intégré 12.

### Deuxième variante :

Sur la couche isolante 14 (figure 2), on dépose une fine couche conductrice 22 (en tiret sur la figure 2) puis on réalise des espaceurs comme illustré sur la figure 3. On dépose ensuite une couche de résine que l'on grave selon la forme représentée sur la figure 5 (la résine subsistant à l'extérieur de la zone hachurée sur la figure 5). Dans les parties gravées, la couche métallique se trouve ainsi dégagée.

Par un procédé électrolytique, on fait croître sur cette couche métallique une couche magnétique de forte perméabilité, jusqu'à ce que son épaisseur atteigne la largeur de la piste à lire. On enlève ensuite la résine. Il reste un circuit magnétique 30 tel que représenté en perspective sur la figure 6, avec son espaceur 20, et ses deux fentes F1 et F2. Ce circuit 30 est toujours disposé à proximité du circuit intégré 12. On enlève ensuite la couche métallique fine 22 là où elle est apparue, c'est-à-dire en dehors du circuit magnétique.

Le procédé de réalisation se poursuit alors, pour les deux variantes, de la manière suivante.

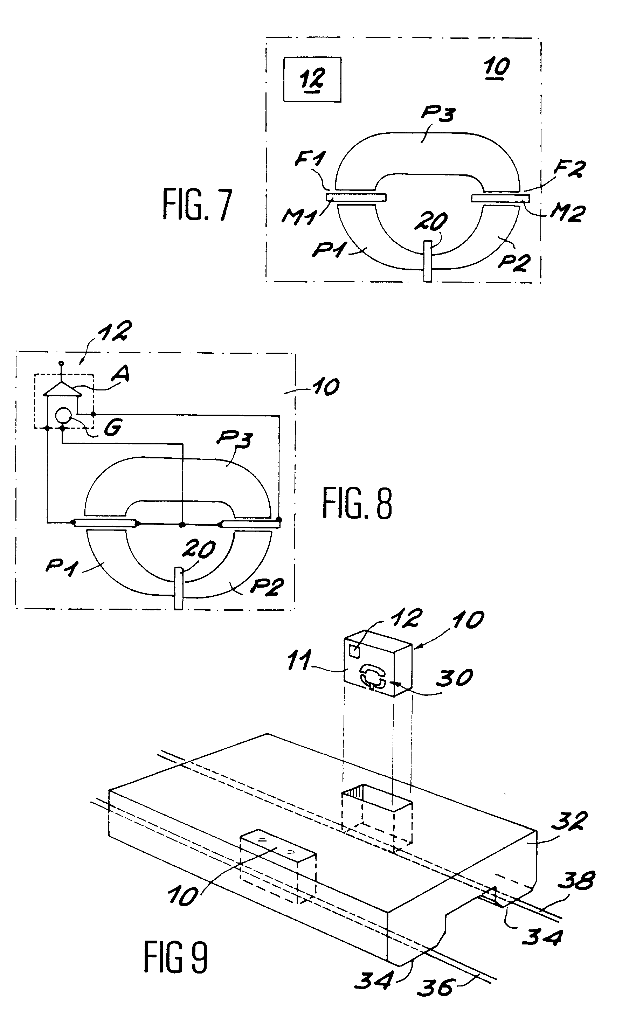

On dépose sur l'ensemble, par pulvérisation cathodique, une fine couche de fer-nickel que l'on grave pour ne laisser subsister, dans les fentes F1 et F2, que de minces bandes formant des magnétorésistances M1 et M2. Comme illustré sur la figure 7, ces fines bandes ne sont pas en contact électrique avec le circuit magnétique.

Au lieu de magnétorésistances, on pourrait insérer dans les fentes F1 et F2, des magnétodiodes ou des magnétotransistors réalisés directement sur le substrat en silicium.

On forme ensuite des connexions électriques entre les magnétorésistances M1 et M2 et chaque circuit intégré 12, notamment avec le générateur de courant régulé G et l'amplificateur différentiel A. Ces connexions sont obtenues par dépôt de fines bandes de matériau conducteur. La sortie de l'amplificateur constitue la sortie de la tête de lecture (cf. figure 8).

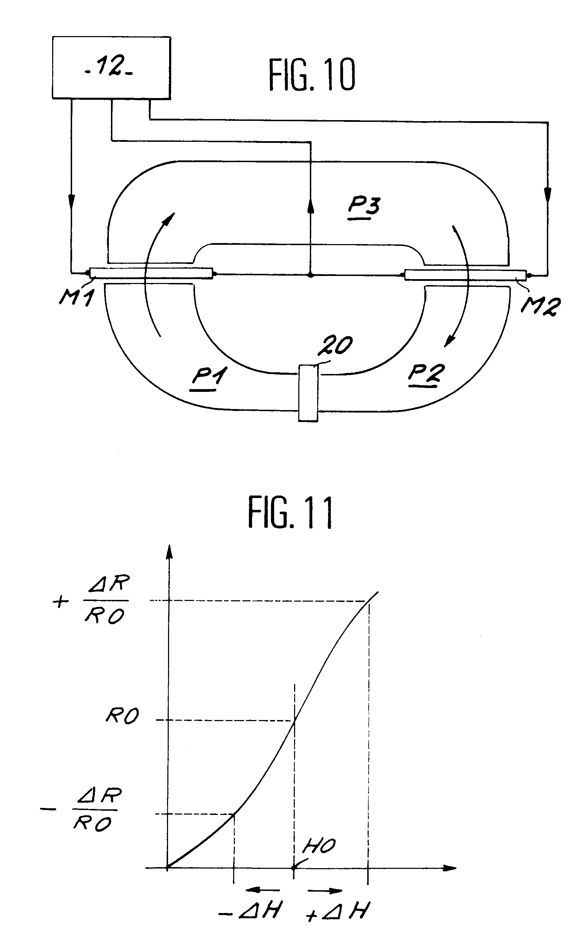

On obtient ainsi un grand nombre de composants constitués chacun par un circuit magnétique 30 et un circuit intégré 12. On découpe ces composants et on les insère dans un patin de vol 32, comme illustré sur la figure 9. L'assemblage se fait par collage ou par soudure au verre. Le patin complet comprend un plan de vol 34 et présente une forme de catamaran. Les pistes 36 et 38 défilent sous l'entrefer de chaque circuit magnétique. La face 11, sur laquelle se trouvent le circuit intégré 12 et le circuit magnétique 30, est perpendiculaire au plan de vol 34 et parallèle aux pistes 36, 38.

On conçoit, dès lors, que la largeur de la piste soit égale à l'épaisseur de la couche magnétique formant le circuit. Ainsi, cette largeur peut être très faible, et de l'ordre du micron.

Les figures 10 et 11 permettent de mieux comprendre le fonctionnement de la tête de lecture de l'invention, une fois complétée.

Sur la figure 10, les flèches dans le circuit magnétique montrent le sens de l'aimantation lors de la lecture et les flèches dans les connexions électriques le sens du courant circulant à travers les magnétorésistances. Celles-ci sont par ailleurs polarisées par des moyens connus non représentés (autopolarisation, "barber poles", etc...).

Cette polarisation est liée au courant de lecture et à l'aimantation, de telle sorte que la variation de résistance soit opposée dans les deux magnétorésistances c'est-à-dire telle que la résistance augmente dans l'une des magnétorésistances alors qu'elle diminue dans l'autre, pour une même variation de l'aimantation.

La figure 11 montre la courbe de variation de la résistance R d'une magnétorésistance en fonction du champ magnétique appliqué. Pour un champ de polarisation Ho la magnétorésistance présente une résistance Ro. Pour une variation ΔH on a une variation relative ΔR/Ro pour l'une des magnétorésistances et -ΔR/Ro pour l'autre. Le déséquilibre en courant obtenu aux entrées de l'amplificateur différentiel est alors proportionnel à 2ΔR/Ro. Par polarisation la valeur de Ho est choisie pour correspondre à la pente maximale de la courbe (point d'inflexion).

## Revendications

1. Tête magnétique de lecture, comprenant un substrat semiconducteur (10) sur lequel est déposé un circuit magnétique (30) en forme de boucle comprenant deux pièces polaires (P1, P2) d'épaisseur égale à la largeur de la piste à lire et séparées par un entrefer, ce circuit magnétique étant interrompu par au moins une fente dans laquelle est inséré un moyen dont une caractéristique électrique est sensible au flux magnétique dans le circuit lors du passage, sous l'entrefer, d'un élément d'information magnétique enregistré sur une piste, cette tête étant caractérisée par le fait que :
- elle comprend un espaceur amagnétique (20) qui a été formé en premier lieu sur le substrat semiconducteur (10) et dont la hauteur est au moins égale à la largeur de la piste à lire, le circuit magnétique ayant été formé ensuite autour de l'espaceur (20), les pièces polaires (P1, P2) venant de part et d'autre de l'espaceur (20), ledit espaceur ayant une épaisseur qui définit la largeur de l'entrefer,
- le circuit magnétique est interrompu par deux fentes (F1, F2) disposées symétriquement par rapport au plan de l'entrefer, les deux éléments (M1, M2) ayant une propriété électrique sensible au champ magnétique étant insérés dans le circuit magnétique dans les deux fentes (F1, F2).

2. Tête magnétique de lecture selon la revendication 1, caractérisée par le fait que le substrat semiconducteur (10) comprend un circuit électronique (12) intégré au substrat, ce circuit électronique comprenant au moins un générateur (G) de courant régulé et un amplificateur différentiel (A) à deux entrées reliées aux deux éléments (M1, M2) et monté en opposition, les deux éléments (M1, M2) étant branchés en opposition aux bornes de l'amplificateur différentiel (A), les deux éléments (M1, M2) étant polarisés de telle sorte que, pour une variation de flux magnétique qu'elles subissent leur caractéristique électrique varie en sens opposés, la sortie de l'amplificateur différentiel (A) fournissant le signal de lecture de la tête.

3. Procédé de réalisation d'une tête de lecture conforme à la revendication 1, caractérisé par le fait que :
- on réalise sur l'une des faces (11) d'un substrat semiconducteur (10) des circuits intégrés (12) comprenant chacun un générateur de courant (G) et un amplificateur différentiel (A),
- on dépose sur cette face (11) du substrat une couche isolante (14),
- on dépose une couche isolante (15) d'épaisseur au moins égale à la largeur de la piste à lire, on grave cette couche (15) pour faire apparaître des parois verticales aux endroits où l'on souhaite former des espaceurs amagnétiques, on dépose sur l'ensemble une couche (16) de matériau amagnétique et on enlève toutes les parties horizontales de la couche (16) de matériau amagnétique pour ne laisser subsister que les parties verticales (18) de la couche (16), on enlève ce qui reste de la couche isolante (15), ce qui laisse autant d'espaceurs amagnétiques (20) que de circuits intégrés (12), chaque espaceur ayant une hauteur supérieure à la largeur de la piste à lire,
- on réalise autant de circuits magnétiques (30) que de circuits intégrés (12), chaque circuit ayant une forme de boucle (P1, P2, P3) enserrant l'espaceur (20) qui définit l'entrefer, chaque boucle présentant deux fentes (F1, F2) symétriques par rapport au plan de l'espaceur,
- on dépose dans les fentes (F1, F2) deux éléments (M1, M2) présentant une caractéristique sensible au champ magnétique,
- on interconnecte ces deux éléments (M1, M2) avec le circuit intégré associé (12),
- on découpe les différents composants obtenus.

4. Procédé selon la revendication 3, caractérisé par le fait que, pour réaliser les circuits magnétiques, on dépose sur la couche isolante (14) une couche de matériau magnétique à forte perméabilité avec une épaisseur égale à celle de la piste à lire, et l'on grave cette couche pour lui donner la forme d'une boucle.

5. Procédé selon la revendication 3, caractérisé par le fait que pour réaliser les circuits magnétiques, on dépose sur la couche isolante (14) une couche conductrice (22), on dépose sur la couche conductrice une couche de résine, on grave cette couche de résine dans des zones correspondant au futur circuit magnétique (30), on fait croître électrolytiquement une couche magnétique de forte perméabilité sur la couche conductrice jusqu'à obtenir une épaisseur égale à la largeur de la piste à lire, on enlève le reste de la résine et la couche conductrice (22) là où elle apparaît en dehors du circuit magnétique.

## Claims

1. Magnetic reading head, incorporating a semiconductor substrate (10) on which is deposited a loop-like magnetic circuit (30) having two pole pieces (P1, P2) of thickness equal to the width of the track to be read and separated by a gap, said magnetic circuit being interrupted by at least one slot in which is inserted a means, whose electrical characteristic is sensitive to the magnetic flux in the circuit during the passage, beneath the gap, of a magnetic information element recorded on a track, said head being characterized in that it comprises an amagnetic spacer (20) firstly formed on the semiconductor substrate (10) and whose height is at least equal to the width of the track to be read, said magnetic circuit having been formed around the spacer (20), the pole pieces (P1, P2) being located on either side of the spacer (20), which has a thickness which defines the width of the gap, the magnetic circuit is interrupted by two slots (F1, F2) arranged symmetrically with respect to the plane of the gap, the two elements (M1, M2) having an electrical property sensitive to the magnetic field being inserted in the magnetic circuit in the two slots (F1, F2).

2. Magnetic reading head according to claim 1, characterized in that the semiconductor substrate (10) comprises an electronic circuit (12) integrated with the substrate, said electronic circuit having at least one regulated current generator (G) and a differential amplifier (A) having two inputs connected to two elements (M1, M2) and connected in opposition, the two elements (M1, M2) being connected in opposition to the terminals of the differential amplifier (A), the two elements (M1, M2) being polarized in such a way that for a magnetic flux variation to which they are subject their electrical characteristic varies in the opposite sense, the output of the differential amplifier (A) supplying the reading signal of the head.

3. Process for producing a reading head according to claim 1, characterized in that on one of the faces (11) of a semiconductor substrate (10) are produced integrated circuits (12), each having a current generator (G) and a differential amplifier (A), on said substrate face (11) is deposited an insulating layer (14), an insulating layer (15) of thickness at least equal to the width of the track to be read is deposited, said layer (15) is etched in order to bring about the appearance of vertical walls at the locations where it is wished to form amagnetic spacers, on the resulting assembly is deposited a layer (16) of amagnetic material and removal takes place of all the horizontal parts of the amagnetic material layer (16) in order to only leave the vertical parts (18) of the layer (16), what is left of the insulating layer (15) is removed, which leaves the same number of amagnetic spacers (20) as there are integrated circuits (12), each spacer having a height exceeding the width of the track to be read, the same number of magnetic circuits (30) are produced as there are integrated circuits (12), each circuit being loop-like and surrounding the spacer defining the gap, each loop (P1, P2, P3) having two symmetrical slots (F1, F2) with respect to the plane of the spacer (20), in the slots (F1, F2) are deposited two elements (M1, M2) having a characteristic sensitive to the magnetic field, these two elements (M1, M2) are interconnected with the associated integrated circuit (12) and the different components obtained are cut.

4. Process according to claim 3, characterized in that for producing the magnetic circuits, on the insulating layer (14) is deposited a high permeability magnetic material layer having a thickness equal to that of the track to be read and said layer is etched in order to give it the shape of a loop.

5. Process according to claim 3, characterized in that for producing the magnetic circuits, on the insulating layer (14) is deposited a conductive layer (12), on the conductive layer is deposited a resin layer, which is etched in the areas corresponding to the future magnetic circuit (30), a high permeability magnetic layer is electrolytically grown on the conductive layer until a thickness is obtained which is equal to the width of the track to be read and the remainder of the resin and the conductive layer (22) are removed where it appears outside the magnetic circuit.

## Patentansprüche

1. Magnetlesekopf, umfassend ein Halbleitersubstrat (10), auf dem ein schleifenförmiger Magnetkreis (30) aufgetragen ist, der zwei Polstücke (P1, P2) umfaßt, deren Dicken gleich der Breiten der zu lesenden Magnetspur ist, und die voneinander durch einen Luftspalt getrennt sind, wobei der Magnetkreis durch mindestens einen Zwischenraum unterbrochen ist, in den ein Mittel eingeführt ist, dessen elektrische Eigenschaft auf den Magnetfluß reagiert, wenn unter dem Luftspalt ein auf einer Spur gespeichertes magnetisches Informationselement vorbeiläuft, wobei dieser Kopf dadurch gekennzeichnet ist, daß:
- er einen nichtmagnetischen Abstandshalter (20) umfaßt, der zunächst auf dem Halbleitersubstrat (10) ausgebildet ist und dessen Höhe mindestens gleich der Breite der Lesespur ist, wobei der Magnetkreis anschließend um den Abstandshalter (20) gebildet wird, die Polteile (P1, P2) auf beide Seite des Abstandhalters (20) kommen, und der Abstandshalter eine Dicke hat, der die Breite des Luftspalts festlegt,
- der Magnetkreis durch zwei Zwischenräume (F1, F2) unterbrochen ist, die symmetrisch bezüglich einer Ebene des Luftspalts angeordnet sind, wobei die beiden Elemente (M1, M2) mit einer auf das Magnetfeld reagierenden elektrischen Eigenschaft in den beiden Zwischenräumen (F1, F2) in den Magnetkreis eingefügt sind.

2. Magnetlesekopf nach Anspruch 1, dadurch gekennzeichnet, daß das Halbleitersubstrat einen elektronischen Schaltkreis (12) umfaßt, der in das Substrat integriert ist, wobei dieser elektronische schaltkreis mindestens einen geregelten Stromgenerator (G) und einen im Gegentakt geschalteten Differenzverstärker (A) mit zwei Eingängen umfaßt, die mit den beiden Elementen (M1, M2) verbunden sind, wobei die beiden Elemente (M1, M2) einenader entgegengesetzt mit den Eingängen des Differenzverstärkers (A) verbunden sind, und die beiden Elemente (M1, M2) so polarisiert sind, daß sie bei einer Änderung des magnetischen Flusses gegenläufig einer Veränderunge ihrer elektrischen Eigenschaften ausgesetzt sind, wobei der Ausgang des Differenzverstärkers (A) das Lesesignal des Kopfes liefert.

3. Verfahren zur Herstellung eines Lesekopfes nach Anspruch 1, dadurch gekennzeichnet, daß auf einer ersten Seite (11) eines Halbleitersubstrats (10) integrierte Schaltkreise (12) hergestellt werden, die je einen Stromgenerator (G) und einen Differenzverstärker (A) umfassen,
- auf dieser Seite (11) des Substrats eine Isolierschicht (14) aufgetragen wird,
- eine Isolierschicht (15) von einer Dicke aufgetragen wird, die mindestens gleich der Breite der Lesespur ist, diese Schicht (15) graviert wird, um vertikale Wände dort entstehen zu lassen, wo die nichtmagnetischen Abstandshalter ausgebildet werden sollen, auf das Ganze eine Schicht (16) nicht magnetischen Materials aufgetragen wird, alle Horizontalteile der Schicht (16) nicht magnetischen Materials entfernt werden, um nur die Vertikalteile (18) der Schicht (16) stehen zu lassen, und die Reste der Isolierschicht (15) entfernt werden, was zu einer gleichen Anzahl nicht magnetischer Abstandshalter (20) wie integrierten Schaltkreisen (12) führt, wobei die Höhe jedes Abstandhalters größer als die Breite der zu lesenden Spur ist,
- ebensoviele Magnetkreise (30) wie integrierte Schaltkreise (12) hergestellt werden, wobei jeder Schaltkreis die Form einer Schleife (B1, B2, B3) hat und den Abstandshalter (20) einzwängt, der den Luftspalt festlegt, wobei jede Schleife zwei Zwischenräume (F1, F2) aufweist, die symmetrisch zur Ebene des Luftspalts sind,
- in jeden der Zwischenräume (F1, F2) zwei Elemente (M1, M2) angeordnet werden, die eine auf das Magnetfeld reagierende Eigenschaft haben,
- die beiden Elemente (M1, M2) mit dem zugeordneten integrierten Schaltkreis (12) verbunden werden,
- die verschiedenen, erhaltenen Bauteile auseinandergeschnitten werden.

4. Verfahren nach Anspruch 3, dadurch gekennzeichnet, daß zum Herstellen der Magnetkreise auf die Isolierschicht (14) eine Schicht magnetischen Materials mit hoher Permeabilität aufgetragen wird, deren Dicke gleich derjenigen der Lesespur ist, und daß diese Schicht graviert wird, um sie schleifenförmig zu formen.

5. Verfahren nach Anspruch 3, dadurch geKennzeichnet, daß zum Herstellen der Magnetkreise auf die Isolierschicht (14) eine Leitungsschicht (22) auftragen wird, auf diese Leitungsschicht eine Harzschicht aufgetragen wird, diese Harzschicht in den Bereichen graviert wird, die dem späteren Magnetkreis (30) entsprechen, elektrolytisch eine Magnetschicht hoher Permeabilität auf der Leitungsschicht solange zum Wachsen gebracht wird, bis eine Dicke erreicht ist, die der Breite der Lesespur gleicht, und die Reste des Harzes sowie die Leitungsschicht (22) dort entfernt werden, wo sie außerhalb des Magnetkreises erscheint.
